# FASCICULE DE BREVET EUROPEEN

(11) **EP 1 526 046 B1**
(45) Date de publication et mention de la délivrance du brevet: **09.08.2006**
(21) Numéro de dépôt: 04300683.2
(22) Date de dépôt: 18.10.2004
(51) Int. Cl.: B60R 21/34, E05B 65/12

(54) **Serrure à absorption de choc pieton pour capot avant de véhicule automobile.**
Schloß für die Haube eines Kraftfahrzeuges mit Fußgänger Schockabsorption.
Lock for automobile hood with shock absorption of pieton.

(30) Priorité: 16.10.2003 FR 0312103
(43) Date de publication de la demande: 27.04.2005
(73) Titulaire: Renault s.a.s., 92100 Boulogne Billancourt (FR)
(72) Inventeur: Seyranian, Chaene, 78920 Ecquevilly (FR); Boucherit, Kaci, 92250 La Garenne Colombes (FR); Pennec, Jean Claude, 78180 Montigny le Bretonneux (FR)

(56) Documents cités:
- EP-A- 1 104 726
- WO-A-02/09983
- WO-A-02/072393
- DE-A- 19 957 868
- GB-A- 434 957

## Description

La présente invention concerne, de façon générale, le domaine des serrures pour automobiles dotées d'un système d'absorption de choc piéton.

Plus particulièrement, l'invention concerne une serrure pour capot de véhicule automobile, comprenant des première et seconde parties dont l'une est destinée à être solidaire du capot et dont l'autre est destinée à être solidaire d'un élément de carrosserie sur lequel le capot est sélectivement appliqué par un mouvement de rapprochement mutuel des deux parties de serrure suivant un premier sens de déplacement orienté, la première partie comprenant une gâche, et la seconde partie comprenant au moins une platine et un moyen de retenue de la gâche, la serrure étant alors dans une configuration de fermeture, cette serrure passant de sa configuration de fermeture à une configuration extrême par un déplacement relatif de la gâche par rapport à la platine dans ledit premier sens.

Lors d'un choc avant entre un véhicule automobile et un piéton, la tête de celui-ci vient généralement percuter la carrosserie du véhicule, et touche principalement le capot avant, les montants de baie ou le pare brise.

C'est la raison pour laquelle de nombreux constructeurs d'automobiles ont développé diverses solutions visant à amortir le choc subi par un piéton percuté par un véhicule automobile, le choc pouvant par exemple être amorti par la serrure du capot.

Une serrure du type précédemment défini, permettant un tel amortissement de choc, est par exemple décrite dans le document brevet DE19957868-A1. Ce document présenteun moyen d'amortissementdu choc piéton positionné à l'intérieur de la platine et supportant le moyen de retenue de la gâche. Lors d'un choc le moyen de retenue 10 qui retient la gâche 9 appuie sur un mécanisme articulé de liaison qui est relié au moyen d'amortissement. Ce dernier se déplace par rapport à la platine suivant le premier sens et pousse le piston d'un vérin dont la chambre de compression contient du fluide.

Ce dispositif de l'art antérieur est particulièrement efficace mais nécessite un mécanisme de liaison du moyen de retenue par rapport à la platine qui soit moblile selon l'axe de déplacement de la gâche, tout au long du passage de la configuration de fermeture à la configuration extrême. Ce mécanisme de liaison qui est articulé, est complexe à réaliser et comporte de nombreuses pièces augmentant à la fois le coût de fabrication de la serrure et le risque de disfonctionnement durant le déplacement.

Dans ce contexte, la présente invention a pour but de proposer une serrure pour capot de véhicule automobile permettant d'assurer une fonction d'amortissement de choc simple à mettre en oeuvre, sans nécessité d'utiliser un mécanisme de liaison mobile avec la gâche tout au long du passage de la serrure de sa configuration de fermeture à sa configuration extrême.

A cette fin, la serrure pour capot de véhicule automobile de l'invention, par ailleurs conforme à la définition qu'en donne le préambule défini précédement, est essentiellement caractérisée en ce qu'en configuration extrême, une portion d'appui de la gâche est en contact contre un moyen d'amortissement de choc exerçant sur la gâche,une force d'amortissement opposée au déplacement de la gâche dans le premier sens et corrélativement au passage de la serrure de sa configuration de fermeture a sa configuration extrême.

En cas de choc, la serrure selon l'invention passe de sa configuration de fermeture à sa configuration extrême par déplacement selon le premier sens de la gâche par rapport à la platine. Lors de ce déplacement, la gâche vient en contact directement contre le moyen d'amortissement de choc, sans qu'il y ait besoin de mécanisme de liaison mobile entre le moyen d'amortissement et la gâche.

On peut par exemplefaire en sorteque la gâche soitdotée d'un premier cran de retenue, et que le moyen de retenue soit élastique et monté mobile sur la platine, cette serrure adoptant sélectivement une configuration d'ouverture, la configuration de fermeture, et la a configuration extrême.

Dans la configuration d'ouverture de la serrure, le moyen de retenue élastique se trouve dans une première position autorisant l'insertion de la gâche dans un logement de la seconde partie par le mouvement de rapprochement des deux parties de serrure, et un libre dégagement de la gâche hors de ce logement par un mouvement d'éloignement mutuel des deux parties de serrure, suivant un second sens inverse du premier,

Dans la configuration de fermeture de la serrure, la gâche est retenue prisonnière par le moyen de retenue élastique, vis-à-vis du mouvement suivant le second sens, par enclenchement d'une portion du moyen de retenue élastique avec le premier cran de retenue, la serrure passant de sa configuration d'ouverture à sa configuration de fermeture par un déplacement relatif de la gâche par rapport à la platine suivant le premier sens, depuis une position d'insertion de la gâche dans le logement jusqu'à une position de retenue de la gâche dans laquelle le premier cran de retenue de la gâche est positionné de façon à permettre l'enclenchement de la portion du moyen de retenue élastique,

Dans laconfiguration extrême de la serrure, la portion du moyen de retenue élastique est déclenchée et éloignée du premier cran de retenue.

D'autres caractéristiques et avantages de l'inventionressortiront clairement de la description qui en est faite ci-après, à titre indicatif et nullementlimitatif, en référence aux dessins annexés, dans lesquels: référence aux dessins dans lesquels :

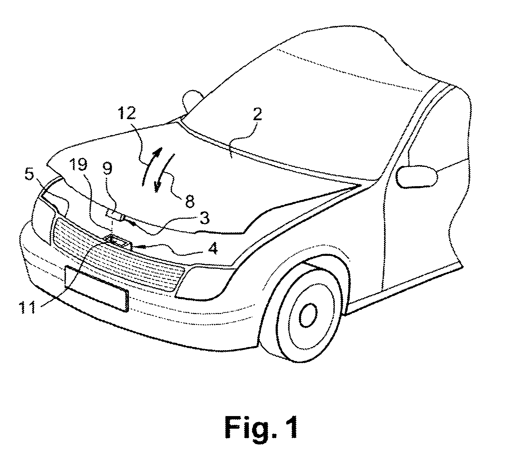

la figure 1 représente une vue schématique d'une partie avant de véhicule automobile comportant une serrure conforme a l'invention;
la figure 2 représente une vue en coupe de la serrure selon l'invention, en configuration extrême, après un choc ;
la figure 3 représente une vue en coupe dela serrure selon l'invention, en configuration de fermeture ;

Comme annoncé précédemment, l'invention concerne une serrure pour capot de véhicule automobile.

La serrure selon l'invention est composée de deux parties, respectivement appelées première partie 3 et seconde partie 4.

La première partie 3 de la serrure est par exemple solidaire du capot 2 et comprend essentiellement une gâche 9. La seconde partie 4 de la serrure est par exemple solidaire d'un élément 5 de carrosserie du véhicule automobile. Les deux parties 3 et 4 de serrure sont mobiles l'une par rapport à l'autre, selon un axe de déplacement 19. Afin de fermer le capot 2, la première partie 3 est sélectivement rapprochée de la seconde 4 par déplacement suivant un premier sens de déplacement 8 orienté sensiblement parallèle à l'axe de déplacement 19. Ces deux parties 3 et 4 de serrure peuvent également être sélectivement éloignées l'une de l'autre par écartement de la première partie 3 suivant une seconde direction 12 inverse de la première, dans un mouvement d'ouverture du capot 2.

Lorsque le capot est fermé, la serrure esten configuration de fermeture. Lorsque le capot est ouvert, la serrure est en configuration d'ouverture. Enfin, en cas de choc, le capot est enfoncé et la serrure est en configuration extrême.

Lorsque la serrure est dans une configuration comprise entre la configuration de fermeture ou dans une configuration extrême, la gâche 9 est insérée dans un logement 11 pratiqué dans la seconde partie 4 de la serrure 1.

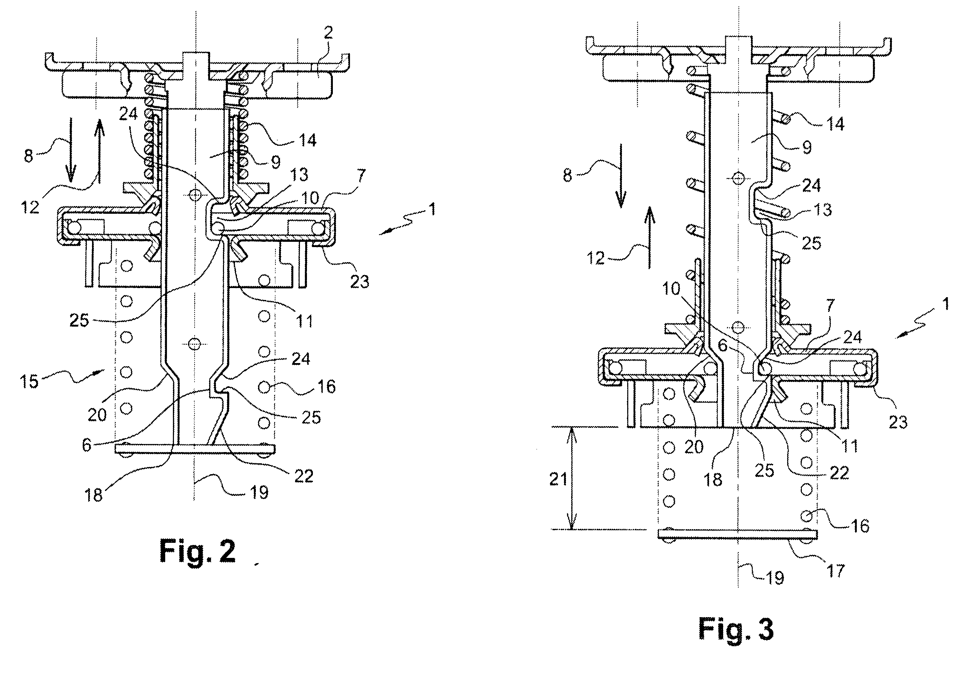

Dans la configuration extrême de la serrure telle que représentée sur la figure 2, la gâche 9 est fixée sur une portion de capot 2,et enfoncée dans le logement 11 qui est pratiqué dans une platine 7. La platine 7 qui fait partie de la seconde partie 4 de la serrure est adaptée pour être fixée sur un élément de carrosserie 5 du véhicule. Une surface de mise en position23 de cette platine 7 sur l'élément de carrosserie 5 est positionnée sur une face orientée dans le premier sens 8 qui est celui d'enfoncement dela gâche 9 dans le logement 11.

La gâche 9 a une forme de cylindre allongé, d'axe principal 19, dont une extrémité est fixée au capot et dont l'autre extrémité est orientée selon le premier sens 8,de façon à pouvoir être insérée dans le logement 11 de la platine 7.

La gâche 9 possède a cette dernière extrémité une portion d'appui 18plane orientée dans le premier sens 8.Cette portion d'appui18 est sensiblement perpendiculaire avec l'axe de déplacement19. La gâche 9 possède à cette même dernière extrémité, un chanfrein 22 raccordé à la surface d'appui 18 et facilitant son centrage et son insertion dans le logement 11 circulaire de la platine 7.

Des premier et second crans de retenue 6 et 13, en forme dedentssont disposés surdes portions périphériques annulaire de la gâche 9. Chacun de ces crans 6 et 13 sont formés dans la gâche 9 de telle manière qu'ils possèdent chacun une surface de retenue 25 sensiblement perpendiculaire à l'axe 19 et orientée dans le second sens 12, et une surface de déclenchement 24 inclinée par rapport à l'axe 19 et orientée dans le premier sens 8. Le premier cran 6 est disposé à proximité de l'extrémité de la gâche portant la surface d'appuie 18 et le second cran est disposé à proximité de l'extrémité de la gâche qui est positionnée à proximité du capot 2. Les deux crans 6 et 13 forment chacun un retrait latéral dans la gâche cylindrique 9, et sont sensiblement alignés parallèlement à l'axe 9.

Un moyen de retenue 10 est un fil 10 de serrure élastique formant un anneau élastique monté mobile sur la platine 7. Le moyen de retenue 10 est mobile au moins radialement par rapport à l'axe 19 et est adapté pour s'insérer élastiquement dans chacun des crans 6 et 13. Un mécanisme de commande, non représenté sur les figures, est adapté pour permettre de relâcher sélectivement, manuellement et/ou automatiquement, les efforts du moyen de retenue 10 sur la gâche 9. Ce mécanisme de commande est utilisé pour faire passer la serrure en configuration d'ouverture. L'insertion du moyen de retenue 10 dans un cran 6 ou 13 se fait élastiquement, lorsque l'un des crans 6 ou 13 est positionné face au moyen de retenue 10.

Ainsi en configuration d'ouverture, la gâche 9 est libre et le moyen de retenue élastique 10 obstrue une portion du logement 11. Lors du passage de la serrure de sa configuration d'ouverture à sa configuration de fermeture, la gâche 9 est d'abord rapprochée du logement puis insérée dans le logement 11, le chanfrein 22aidant son centrage dans le logement 11 et favorisant l'écartement du moyen de retenue élastique 10.

Lorsque le premier cran 6 est face au moyen de retenue élastique 10, ce dernier quiavait été contraint élastiquement lors de l'insertion de la gâche 9, se ressert et vient se placer dans le premier cran 6. Cette position de blocage de la gâche 9 par insertion du moyen de retenue élastique dans le premier cran 6 correspond à la serrure en configuration de fermeture, tel que cela est représenté sur la figure 3. Dans cette configuration de fermeture de la serrure 1, la gâche 9 est retenue prisonnière par le moyen de retenue élastique 10, vis-à-vis du mouvement suivant le second sens 12.

Sous l'effort provoqué par le choc piéton et orienté selon le premier sens 8, la serrure passe de la configuration de fermeture (figure 3) à la configuration extrême (figure 2).

La gâche 9 dispose d'une portion périphérique de forme sensiblement conique 20. Une portion de cette forme conique constitue la surface de déclenchement 34 pour dégagement du premier cran de retenue 6. Cette surface de déclenchement 24 permet de transmettre une partie de l'effort du choc piéton vers le moyen de retenue 10 sous la forme d'un effort sensiblement radial parrapport à l'axe 19.

Le moyen de retenue de la gâche 9 subit alors une force de déclenchement générée par déplacement de la gâche 9 suivant le premier sens 8 et, est alors repoussé hors du premier cran 6. La gâche 9 est alors libérée du moyen de retenue 10 et peut alors se translater librement par rapport à la platine 7 suivant le premier sens 8, permettant corrélativement le passage de la serrure de sa configuration de fermeture à sa configuration extrême.

La gâche 9 coulisse alors dans le logement 11 selon le premier sens 8 jusqu'à ce que le second cran 13 soit placé face au moyen de retenue élastique 10. Dans cette position, le moyen de retenue 10 élastique qui avait été contraint élastiquement lors de son déclenchement, se ressert et vient se placer dans le premier cran 6. Cette position de blocage de la gâche 9 par insertion du moyen de retenue élastique 10 dans le second cran 6 correspond à la serrure enconfiguration extréme, tel que cela est représente sur la figure 2.

Dans cette configuration extrême,la portion du moyen de retenue élastique 10 est déclenchée et éloignée du premier cran de retenue 6. Une portion d'appui 18 de la gâche 9 est également en contact contre un moyen d'amortissement de choc 15 exerçant sur la gâche 9, une force d'amortissement opposée au déplacement de la gâche 9 dans le premier sens 8 et corrélativement opposée au passage de la serrure de sa configuration de fermeture à sa configuration extrême.

Le moyen d'amortissementà de choc 15comporte un moyende rappel élastique 16 qui est un ressort hélicoïdal relié à la platine 7 et positionné sur un coté 23 de la platine 7 qui est orienté selon le premier sens 8.

Une extrémité de ce ressort 16 est fixée sur la platine 7 et une autre extrémité libre de ce ressort est mobile par rapport à la platine 7. Une coupelle 17 est fixée sur l'extrémité libre du ressort, et positionnée transversalement par rapport à l'axe de déplacement 19 de la gâche 9. Ainsi, en configuration extrême, la portion d'appui 18 de la gâche est en contact avec la coupelle 17 qui lui fait face, selon l'axe de déplacement 19 de la gâche 9.

En configuration extrême, dans une position extrême, le second cran de retenue 13 de la gâche 9 est enclenché avec le moyen de retenue élastique 10 de manière a ce que la serrure ne puisse pas passer librement de sa configuration extrême vers sa configuration de fermeture.

Ce second cran 13 constitue ainsi un témoin signalant que la serrure a subi un choc et est passée en configuration extrême, ce qui nécessite son contrôle ou son changement par un spécialiste.

Préférentiellement, lorsque la serrure esten configurationde fermeture, comme représenté sur la figure 3, la portion d'appui18 de la gâche 9 est éloignée du moyen d'amortissement de choc 15, en l'espèce la coupelle 17, par un jeu de fonctionnement 21. La serrure passe successivement, par déplacement de la gâche 9 suivant le premier sens 8, de sa configuration de fermeture à une configuration intermédiaire puis à sa position extrême de la configuration extrême. La portion d'appui 18 entre en contact avec le moyen d'amortissement de choc 15 lorsque la serrure est dans sa position intermédiaire ce qui permet d'ajuster la progression de l'effort d'amortissement tout au long de la course de la gâche 9, au bénéfice de la protection lors d'un choc piéton.

L'effort d'amortissement généré parle moyen d'amortissement n'apparaît qu'au momentt ou la serrure est en position intermédiaire, c'estt à dire au moment du contact entre la surface d'appui 18 de la gâche 9 avec la coupelle 17 du moyen d'amortissement.

L'effort d'amortissementà généré par le moyen d'amortissement peut être adapté en modifiant la raideur du ressort16, ou en utilisant un moyen d'amortissementt hydraulique et/ouun moyen d'amortissement par friction et/ou un moyen d'amortissement par déformation de pièces mécaniques.

Avantageusement, la serrure comporte un moyen d'amortissement de fermeture 14 tel qu'un moyen élastique compressible ou ressort disposé entre les première et seconde parties de la serrure. Ce moyen 14 est utilisé pour éviter que la serrure ne passe en configuration extrême lors de la fermeture du capot. Ce moyen élastique 14 est adapté pour être compressible tout au long du passage de la serrure, de sa configuration de fermeture à sa configuration extrême.

## Revendications

1. Serrure (1) pour capot (2)de véhicule automobile, comprenant des première (3) et seconde (4) parties dont l'une est destinée à être solidaire du capot (2) et dont l'autre est destinéeà être solidaire d'un élément(5) de carrosserie sur lequel le capot (2)est sélectivement appliqué par un mouvement de rapprochement mutuel des deux parties de serrure suivant un premiersens (8)de déplacement orienté,
la premièrepartie comprenant une gâche (9),et la seconde partie (4) comprenant au moins une platine (7) et un moyen de retenue (10) de la gâche (9), la serrure étant alors dansune configuration de fermeture, cette serrure passant de sa configuration de fermetureà une configuration extrême par un déplacement relatif de la gâche (9)par rapport à la platine (7) dans ledit premier sens (8), la serrure étant **caractérisée en ce qu'**en configuration extrême, uneportion d'appui (18) de la gâche (9) est en contactcontre un moyen d'amortissement de choc (15) exerçant sur la gâche (9), une force d'amortissement opposée au déplacement de la gâche (9) dans le premier sens (8) et corrélativement au passage de la serrure de sa configuration de fermeture à sa configuration extrême, le moyen de retenue étant monté mobile sur la platine (7).

2. Serrure (1) pour capot (2) selon la revendication 1 **caractérisée en ce que** la gâche (9) est dotée d'un premier cran de retenue (6), et **en ce que** le moyen de retenue (10) est élastique, cette serrure adoptant sélectivement une configuration d'ouverture, la configuration de fermeture,et la configuration extrême,
- dans la configuration d'ouverture de la serrure (1), le moyen de retenue élastique (10) se trouve dans une première position autorisant l'insertion de la gâche (9) dans un logement (11)de la seconde partie par le mouvement de rapprochement des deux parties (3, 4) de serrure (1), et un libre dégagement de la gâche (1) hors de ce logement (11) par unmouvement d'éloignement mutuel des deux parties (3, 4) de serrure, suivant un second sens (12) inverse du premier (8),
- dans la configuration de fermeture de la serrure (1), la gâche (9) est retenue prisonnière par le moyen de retenue élastique (10)vis-à-vis du mouvement suivant le second sens (12), par enclenchement d'une portion du moyen de retenue élastique (10) avec le premier cran de retenue (6), la serrure passant de sa configuration d'ouverture à sa configuration de fermeture par un déplacement relatif de la gâche (9) par rapport à la platine (7) suivant le premier sens (8), depuis une position d'insertion de la gâche (9) dans le logement (11) jusqu'à une position de retenue de la gâche (9) dans - laquelle le premier cran de retenue (6) de la gâche (9) est positionné de façon à permettre l'enclenchement de la portion du moyen de retenue élastique (10)
- dans la configuration extrême de la serrure (1), la portion du moyen de retenue élastique (10)est déclenchée et éloignée du premier cran de retenue (6).

3. Serrure selon l'une des revendications 1 ou 2 **caractérisée en ce que** dans une position extrême de la configuration extrême, un second cran de retenue (13) de la gâche (9)est enclenché avec le moyen de retenue élastique (10) de manière à ce que la serrure ne puisse pas passer librement de sa configuration extrême vers sa configuration de fermeture.

4. Serrure selon l'une des revendications 1 à 3 **caractérisée en ce que** le moyen d'amortissement de choc (15) comporte un moyen de rappel élastique (16) relié à la platine (7) et portant une coupelle (17) transversale à un axe de déplacement (19) de la gâche (9) selon les premier et second sens (8, 12) et **en ce qu'**en configuration extrême, la portion d'appui de la gâche est en contact avec la coupelle

5. Serrure selon l'une des revendications 1 à 4 **caractérisée en ce que** la gâche a une forme allongée et **en ce que** la portion d'appui de la gâche (9) est disposée à une extrémité de celle-ci et, est orientée selon le premier sens

6. Serrure selon l'une des revendications 1 à 5 **caractérisée en ce que** la gâche (9) dispose d'une portion périphérique de forme sensiblement conique (20) adaptée à venir en contact avecle moyen de retenue(10) de la gâche (9) et à exercer sur celui-ci une force de déclenchement générée par déplacement de la gâche (9) suivant le premier sens (8), cette force de déclenchement permettant de libérer la gâche (9) du moyen de retenue et permettant corrélativement le passage de la serrure de sa configuration de fermeture à sa configuration extrême.

7. Serrure selon l'une des revendications 1 à 6 **caractérisée en ce qu'**en configuration de fermeture, la portion d'appui (18) dela gâche (9) est éloignée du raoyen d'amortissementi de choc (15) par un jeu de fonctionnement (21), de manièreEx- à ce que la serrure passe successivement, 1 par déplacement de la gâche suivant le premier sens (8),de sa configuration de fermeture à une configuration intermédiaire puis à sa configuration extrême, la portion d'appui (18) entrant en contact avec le moyen d'amortissement de choc (15) lorsque la serrure est dans sa configurationintermédiaire.

8. Serrure selon l'une des revendications1 à 7 **caractérisée en ce qu'**elle comporte un moyen d'amortissement de fermeture (14) disposé entre les première et seconde parties de la serrure.

9. Serrure selon la revendication 8 **caractérisée en ce que** le moyen d'amortissementde fermeture (14) estun moyen élastique compressibletout au long du passage de la serrure, de sa configuration de fermeture à sa configuration extrême.

10. Serrure selon l'une des revendications 1 à 9 **caractérisée en ce que** le moyen de retenue (10) de la gâche (9) est un fil élastique de serrure.

## Claims

1. Latch (1) for a bonnet (2) of a motor vehicle, comprising a first part (3) and second part (4) one of which is designed to be fixedly attached to the bonnet (2) and the other of which is designed to be fixedly attached to a bodywork element (5) to which the bonnet (2) is selectively pressed by a movement towards one another of the two latch parts in a first direction (8) of guided movement, the first part comprising a striker plate (9) and the second part (4) comprising at least one plate (7) and a means (10) of retaining the striker plate (9), the latch then being in a closed configuration, this latch travelling from its closed configuration to an extreme configuration by a relative movement of the striker plate (9) relative to the plate (7) in the said first direction (8), the latch being **characterized in that**, in the extreme configuration, a bearing portion (18) of the striker plate (9) is in contact against a shock-absorbing means (15) exerting on the striker plate (9), a damping force opposed to the movement of the striker plate (9) in the first direction (8) and correlatively to the travel of the latch from its closed configuration to its extreme configuration, the retaining means being mounted so as to be able to move on the plate (7).

2. Latch (1) for a bonnet (2) according to Claim 1, **characterized in that** the striker plate (9) is provided with a first retention notch (6) and **in that** the retaining means (10) is elastic, this latch selectively adopting an open configuration, the closed configuration and the extreme configuration,
- in the open configuration of the latch (1), the elastic retaining means (10) is in a first position allowing the striker plate (9) to be inserted into a housing (11) of the second part by the movement towards one another of the two parts (3, 4) of the latch (1), and a free clearance of the striker plate (9) outside this housing (11) by a movement away from one another of the two parts (3, 4) of the latch, in a second direction (12), the reverse of the first (8),
- in the closed configuration of the latch (1), the striker plate (9) is held trapped by the elastic retaining means (10) against the movement in the second direction (12) by the engagement of a portion of the elastic retaining means (10) with the first retaining notch (6), the latch travelling from its open configuration to its closed configuration by a relative movement of the striker plate (9) relative to the plate (7) in the first direction (8), from a position of insertion of the striker plate (9) in the housing (11) to a position of retention of the striker plate (9) in which the first notch (6) for retaining the striker plate (9) is positioned so as to allow the engagement of the portion of the elastic retaining means (10),
- in the extreme configuration of the latch (1), the portion of the elastic retaining means (10) is released and moved away from the first retaining notch (6).

3. Latch according to one of Claims 1 or 2, **characterized in that**, in an extreme position of the extreme configuration, a second notch (13) for retaining the striker plate (9) is engaged with the elastic retaining means (10) so that the latch cannot travel freely from its extreme configuration to its closed configuration.

4. Latch according to one of Claims 1 to 3, **characterized in that** the shock-absorbing means (15) comprises an elastic return means (16) connected to the plate (7) and supporting a dish (17) transverse to an axis of movement (19) of the striker plate (9) in the first and second directions (8, 12) and **in that**, in the extreme configuration, the bearing portion of the striker plate is in contact with the dish (17).

5. Latch according to one of Claims 1 to 4, **characterized in that** the striker plate has an elongated shape and **in that** the bearing portion of the striker plate (9) is placed at one end of the latter and is oriented in the first direction (8).

6. Latch according to one of Claims 1 to 5, **characterized in that** the striker plate (9) has a substantially conical-shaped peripheral portion (20) suitable for coming into contact with the means (10) of retaining the striker plate (9) and for exerting thereupon a releasing force generated by movement of the striker plate (9) in the first direction (8), this releasing force making it possible to release the striker plate (9) from the retaining means and correlatively allowing the latch to travel from its closed configuration to its extreme configuration.

7. Latch according to one of Claims 1 to 6, **characterized in that**, in the closed configuration, the bearing portion (18) of the striker plate (9) is distant from the shock-absorbing means (15) by an operating clearance (21), so that the latch travels successively, by movement of the striker plate in the first direction (8), from its closed configuration to an intermediate configuration and then to its extreme configuration, the bearing portion (18) entering into contact with the shock-absorbing means (15) when the latch is in its intermediate configuration.

8. Latch according to one of Claims 1 to 7, **characterized in that** it comprises a closure damping means (14) placed between the first and second parts of the latch.

9. Latch according to Claim 8, **characterized in that** the closure damping means (14) is an elastic means that can be compressed throughout the travel of the latch, from its closed configuration to its extreme configuration.

10. Latch according to one of Claims 1 to 9, **characterized in that** the means (10) for retaining the striker plate (9) is an elastic latch wire.

## Patentansprüche

1. Schloss (1) für die Haube (2) eines Kraftfahrzeugs, das einen ersten (3) und einen zweiten (4) Teil aufweist, von denen der eine fest mit der Haube (2) verbunden sein soll und von denen der andere fest mit einem Karosserieelement (5) verbunden sein soll, an das die Haube (2) durch eine gegenseitige Annäherungsbewegung der beiden Schlossteile in einer ersten ausgerichteten Verschiebungsrichtung (8) gezielt gedrückt wird, wobei der erste Teil ein Schließblech (9) und der zweite Teil (4) mindestens eine Platte (7) und ein Mittel (10) zum Halten des Schließblechs (9) aufweist, wobei sich das Schloss dann in einer Schließkonfiguration befindet, wobei dieses Schloss durch eine Relativbewegung des Schließblechs (9) bezüglich der Platte (7) in der ersten Richtung (8) aus seiner Schließkonfiguration in eine Endkonfiguration übergeht, **dadurch gekennzeichnet, dass** in der Endkonfiguration ein Teil (18) zur Abstützung des Schließblechs (9) mit einem Stoßdämpfungsmittel (15) in Kontakt steht, das auf das Schließblech (9) eine Dämpfungskraft ausübt, die der Bewegung des Schließblechs (9) in der ersten Richtung (8) und entsprechend dem Übergang des Schlosses aus seiner Schließkonfiguration in seine Endkonfiguration entgegenwirkt, wobei das Haltemittel auf der Platte (7) beweglich montiert ist.

2. Schloss (1) für die Haube (2) nach Anspruch 1, **dadurch gekennzeichnet, dass** das Schließblech (9) mit einer ersten Halteklinke (6) versehen ist und dass das Haltemittel (10) elastisch ist, wobei dieses Schloss gezielt eine Öffnungskonfiguration, die Schließkonfiguration und die Endkonfiguration einnimmt,
- wobei sich in der Öffnungskonfiguration des Schlosses (1) das elastische Haltemittel (10) in einer ersten Position befindet, die das Einführen des Schließblechs (9) in eine Aufnahme (11) des zweiten Teils durch die Annäherungsbewegung der beiden Teile (3, 4) des Schlosses (1) und ein freies Ausrücken des Schließblechs (9) aus dieser Aufnahme (11) durch eine gegenseitige Entfernungsbewegung der beiden Teile (3, 4) des Schlosses entlang einer der ersten Richtung (8) entgegengesetzten zweiten Richtung (12) gestattet,
- wobei in der Schließkonfiguration des Schlosses (1) das Schließblech (9) durch das elastische Haltemittel (10) gegenüber der Bewegung entlang der zweiten Richtung (12) durch Einrasten eines Teils des elastischen Haltemittels (10) mit der ersten Halteklinke (6) festgehalten wird, wobei das Schloss durch eine Relativbewegung des Schließblechs (9) bezüglich der Platte (7) entlang der ersten Richtung (8) von einer Einführposition des Schließblechs (9) in die Aufnahme (11) bis in eine Halteposition des Schließblechs (9), in der die erste Halteklinke (6) des Schließblechs (9) so angeordnet ist, dass sie ein Einrasten des Teils des elastischen Haltemittels (10) gestattet, aus seiner Öffnungskonfiguration in seine Schließkonfiguration übergeht,
- wobei in der Endkonfiguration des Schlosses (1) der Teil des elastischen Haltemittels (10) aus der ersten Halteklinke (6) freigegeben und davon entfernt ist.

3. Schloss nach Anspruch 1 oder 2, **dadurch gekennzeichnet, dass** in einer Endposition der Endkonfiguration eine zweite Halteklinke (13) des Schließblechs (9) mit dem elastischen Haltemittel (10) rastverriegelt ist, so dass das Schloss nicht frei aus seiner Endkonfiguration in seine Schließkonfiguration übergehen kann.

4. Schloss nach einem der Ansprüche 1 bis 3, **dadurch gekennzeichnet, dass** das Stoßdämpfungsmittel (15) ein elastisches Rückholmittel (16) aufweist, das mit der Platte (7) verbunden ist und einen quer zu einer Verschiebungsachse (19) des Schließblechs (9) entlang der ersten und der zweiten Richtung (8, 12) liegenden Teller (17) aufweist und dass der Abstützteil des Schließblechs in der Endkonfiguration mit dem Teller (17) in Kontakt steht.

5. Schloss nach einem der Ansprüche 1 bis 4, **dadurch gekennzeichnet, dass** das Schließblech eine längliche Form aufweist und dass der Abstützteil des Schließblechs (9) an einem Ende davon angeordnet und entlang der ersten Richtung (8) ausgerichtet ist.

6. Schloss nach einem der Ansprüche 1 bis 5, **dadurch gekennzeichnet, dass** das Schließblech (9) über einen Umfangsteil (20) mit im Wesentlichen konischer Form verfügt, der mit dem Mittel (10) zum Halten des Schließblechs (9) in Kontakt kommen und darauf eine Freigabekraft ausüben soll, die durch Verschieben des Schließblechs (9) entlang der ersten Richtung (8) erzeugt wird, wobei diese Freigabekraft die Freigabe des Schließblechs (9) aus dem Haltemittel und entsprechend den Übergang des Schlosses aus seiner Schließkonfiguration in seine Endkonfiguration gestattet.

7. Schloss nach einem der Ansprüche 1 bis 6, **dadurch gekennzeichnet, dass** in Schließkonfiguration der Abstützteil (18) des Schließblechs (9) von dem Stoßdämpfungsmittel (15) um ein Betriebsspiel (21) entfernt ist, so dass das Schloss nacheinander durch Verschieben des Schließblechs (9) entlang der ersten Richtung (8) aus seiner Schließkonfiguration in eine Zwischenkonfiguration und dann in seine Endkonfiguration übergeht, wobei der Abstützteil (18) mit dem Stoßdämpfungsmittel (15) in Kontakt kommt, wenn sich das Schloss in seiner Zwischenkonfiguration befindet.

8. Schloss nach einem der Ansprüche 1 bis 7, **dadurch gekennzeichnet, dass** es ein Schließdämpfungsmittel (14) aufweist, das zwischen dem ersten und dem zweiten Teil des Schlosses angeordnet ist.

9. Schloss nach Anspruch 8, **dadurch gekennzeichnet, dass** das Schließdämpfungsmittel (14) ein elastisches Mittel ist, das entlang dem ganzen Übergang des Schlosses aus seiner Schließkonfiguration in seine Endkonfiguration komprimierbar ist.

10. Schloss nach einem der Ansprüche 1 bis 9, **dadurch gekennzeichnet, dass** das Mittel (10) zum Halten des Schließblechs (9) eine elastische Schlossschnur ist.
